# EUROPÄISCHE PATENTSCHRIFT

(11) **EP 3 649 654 B1**
(45) Veröffentlichungstag und Bekanntmachung des Hinweises auf die Patenterteilung: **16.02.2022**
(21) Anmeldenummer: 18737161.2
(22) Anmeldetag: 14.06.2018
(51) Int. Cl.: G21C 17/00, G21C 17/07

(54) **ANALYSEVORRICHTUNG ZUM NACHWEIS VON SPALTPRODUKTEN DURCH MESSUNG EINER RADIOAKTIVITÄT**
ANALYSIS APPARATUS FOR DETECTING FISSION PRODUCTS BY MEASURING RADIOACTIVITY
DISPOSITIF D'ANALYSE PERMETTANT DE DÉTECTER DES PRODUITS DE FISSION PAR MESURE DE RADIOACTIVITÉ

(30) Priorität: 04.07.2017 DE 102017114835
(43) Veröffentlichungstag der Anmeldung: 13.05.2020
(73) Patentinhaber: Framatome GmbH, 91052 Erlangen (DE)
(72) Erfinder: LANGENBERGER, Jan, 91090 Effeltrich (DE); HUMMEL, Wolfgang, 92318 Neumarkt (DE); ALBRECHT, Thomas, 90765 Fürth (DE); ZIMMERMANN, Christoph, 91096 Möhrendorf (DE); MICHALSKY, Marc, 02791 Oderwitz (DE); ZEH, Peter, 90542 Eckental (DE); BURCHARDT, Carsten, 55270 Schwabenheim (DE)
(74) Vertreter: Lavoix
(86) Internationale Anmeldenummer: PCT/EP2018/065899
(87) Internationale Veröffentlichungsnummer: WO 2019/007661

(56) Entgegenhaltungen:
- JP-A- S54 153 995
- US-A- 4 696 788

## Beschreibung

Die Erfindung betrifft eine Analysevorrichtung zum Nachweis von Spaltprodukten durch Messung einer Radioaktivität sowie ein eine derartige Analysevorrichtung umfassendes Analysesystem.

Betreiber von Kernkraftwerken müssen einen eindeutigen Nachweis erbringen, dass die in Brennelementen angeordneten Brennstäbe dicht sind, bevor ein Wiedereinsatz des Brennelementes im nächsten Reaktorzyklus erfolgt oder bevor das Brennelement zur externen Lagerung abtransportiert wird. Der Nachweis erfolgt typischerweise mittels sogenannter Sippingverfahren oder Sippingtests. Dies sind Leckagetests, bei denen radioaktive Spaltprodukte aus den potentiell leckenden Brennstäben ausgetrieben werden. Anschließend wird eine Gas- oder Flüssigkeitsprobe aus der Umgebung des Brennstabs genommen und hinsichtlich ihrer Radioaktivität untersucht.

Bekannt sind verschiedene, typischerweise als Sippingsysteme bezeichneten Analysesysteme und -verfahren, wie z.B. das sogenannte Mast-Sipping/Teleskop-Sipping für Druckwasserreaktoren (DWR), Wasser-Wasser-Energie Reaktoren (VVER) und Siedewasserreaktoren (SWR), Incore-Sipping für SWR, Box-Sipping/Vakuum-Sipping für DWR, VVER und SWR und Einzelstab-Sipping für DWR und SWR. Diese Analysesysteme und -verfahren unterscheiden sich primär in ihrer Einbindung in verschiedene Verfahrensabläufe, um ein Analyseergebnis zu einem bestimmten Zeitpunkt zu erhalten. Wird beispielsweise ein derartiges Analyseergebnis noch vor dem Entladen des Reaktorkerns benötigt, so bietet sich das Incore-Sipping an, bei dem die Dichtheit von Brennelementen bzw. Brennstäben im Reaktorkern überprüft wird. Soll ein zuverlässiges Analyseergebnis mit möglichst geringem Zeitverlust erstellt werden, so kann beispielsweise ein Mast-Sippingverfahren im Zuge der Kernentladung zum Einsatz kommen. Beim Mast-Sipping erfolgt die Entnahme einer gegebenenfalls Spaltprodukte enthaltende Probe typischerweise über den Innenbereich des Mastes der Brennelementlademaschine.

Je nach Art des Defektes am Brennstab oder abhängig von Länge der Abklingzeit kann ein eindeutiger Nachweis mit Hilfe dieser bekannten Prüfverfahren schwierig sein. Insbesondere ergibt sich diese Problematik bei längerer Lagerungszeit, da unterstellt werden muss, dass ein Defekt nach einem erfolgten und unter Umständen weit zurückliegenden Sippingtest und gegebenenfalls mehreren zwischenzeitlich erfolgten Handhabungen eingetreten sein könnte.

Ein Defektnachweis ist insbesondere bei sehr langen Lagerungszeiten deshalb schwierig, da in diesem Fall für gewöhnlich nur noch Cs-137 als nachweisbares Nuklid in der Wasserphase zur Verfügung steht. Problematisch ist ferner ein sehr hoher Aktivitätsuntergrund in der unmittelbaren Umgebung, aus der die Probe entnommen wird oder wenn aufgrund der Größe oder Art des Defekts ein Spaltgas vollständig aus dem Brennstab entweichen kann, so dass dieses nicht mehr für eine Analyse zur Verfügung steht.

US 4 696 788 zeigt eine Sipping-Vorrichtung zum Nachweis von aus einem Brennelement ausgetretenen Spaltprodukten. Diese Vorrichtung umfasst einen Wasserkreis mit einem ersten Strahlungsdetektor und einen Gaskreis mit einem zweiten Strahlungsdetektor.

Es ist Aufgabe der vorliegenden Erfindung, eine neuartige Analysevorrichtung zum Nachweis von Spaltprodukten anzugeben, welche sich zum Einsatz in verschiedenen Analyse- bzw. Sippingsystemen eignet und einen sicheren Nachweis auch unter erschwerten Randbedingungen und/oder bei unterschiedlich ausgebildeten Leckagearten ermöglicht.

Diese Aufgabe wird gelöst durch eine Analysevorrichtung gemäß Anspruch 1 und ein Analysesystem gemäß Anspruch 9.

Vorteilhafte Weiterbildungen der Erfindung sind Gegenstand der abhängigen Ansprüche.

Eine Analysevorrichtung zum Nachweis von Spaltprodukten durch Messung einer Radioaktivität, umfasst
- eine erste Leitung zum Führen einer Flüssigkeitsprobe,
- einen an die erste Leitung angeschlossenen und zur Messung der Radioaktivität von in der Flüssigkeitsprobe enthaltenen Spaltprodukten ausgebildeten ersten Detektor,
- eine zweite Leitung zum Führen einer Gasprobe und
- einen an die zweite Leitung angeschlossenen und zur Messung eine Radioaktivität der Radioaktivität von in der Gasprobe enthaltenen Spaltprodukten ausgebildeten zweiten Detektor.

Gemäß der Erfindung ist eine von der Sipping-Vorrichtung separate Trennvorrichtung zum Abtrennen von Gas aus der die Flüssigkeitsprobe führenden ersten Leitung umfasst, welche einen in die zweite Leitung mündenden Auslass für entnommenes Gas derart aufweist, dass das entnommene Gas als Gasprobe dem zweiten Detektor zur Messung der Radioaktivität von darin enthaltenen Spaltprodukten zuführbar ist.

Die Erfindung gibt erstmalig eine Analysevorrichtung an, die sich für unterschiedliche Sippingverfahren und damit zum Nachweis einer Vielzahl von unterschiedlichen Leckagearten, wie beispielsweise kleine durchgehende Haarrisse in Brennstäben, sichtbare offene Teilbereiche auf der Seite von Brennstäben, fehlende oder defekte Endkappen und/oder gebrochene Brennstäbe eignet. Die Analysevorrichtung ist insbesondere dazu ausgebildet, die freisetzbaren Spaltprodukte bzw. Nuklide in unterschiedlichen Konzentrationen nachzuweisen. Gasförmige Spaltprodukte können direkt entnommen werden oder mittels der Trennvorrichtung aus der Flüssigkeitsprobe durch Entgasung abgetrennt werden. Als gasförmige Spaltprodukte sind bevorzugt insbesondere die Nuklide Krypton und/oder Xenon nachweisbar.

Es ist insbesondere ermöglicht, dem ersten und/oder zweiten Detektor Gas- und/oder Flüssigkeitsproben kontinuierlich zuzuführen. In diesem Sinne beziehen sich die Begriffe Gasprobe bzw. Flüssigkeitsprobe auch auf kontinuierlich extrahierte und zugeführte Volumenströme, also Gasströme bzw. Flüssigkeitsströme.

Auf Sipping basierende Analysesysteme kommen insbesondere in Abhängigkeit der nachzuweisenden Spaltprodukte zur Anwendung. Incore-Sipping, bei dem eine Prüfung der Brennstäbe im Reaktorkern erfolgt, kommt beispielsweise bei kurzer Abkling- bzw. Lagerzeit zur Anwendung. Hierzu kann insbesondere vorgesehen sein, Xenon (Xe-133), Krypton (Kr-85), Iod (I-131) und/oder Cäsium (Cs-134 und/oder Cs-137) als Spaltprodukte nachzuweisen. Mast-Sipping, bei dem die Entnahme der Flüssigkeits- und/oder Gasprobe während des Entladens des Reaktorkerns oder Umsetzen der Brennelemente im Brennelementlagerbecken erfolgt, kommt beispielsweise bei kurzen bis längeren Abkling- bzw. Lagerzeiten zum Einsatz. Hierzu kann, je nach Art der Leckage, insbesondere vorgesehen sein, Kr-85, Cs-134 und/oder Cs 137 als Spaltprodukte nachzuweisen. Diese Spaltprodukte können auch mit Hilfe von Box-Sipping und/oder Einzelstabsipping, insbesondere im Rahmen eines Reparaturvorgangs am Brennelement nachgewiesen werden. Bei noch längeren Abklingzeiten können beispielsweise die Nuklide Kr-85 und/oder Cs-137 als Spaltprodukte nachgewiesen werden. Die Entnahme der diese Spaltprodukte enthaltenden Gas- und/oder Flüssigkeitsproben erfolgt bevorzugt im Rahmen der genannten Mast-, Box- oder Einzelstab-Sippingverfahren. Bei sehr langen Abkling- bzw. Lagerzeiten steht typischerweise lediglich Cs-137 als Spaltprodukt zum Nachweis zur Verfügung. Der Nachweis erfolgt in diesem Fall bevorzugt mittels Box-Sipping unter zusätzlichem Aufheizen.

Zur Entnahme der Gas- und/oder Flüssigkeitsprobe kommt eine Vorrichtung zum Einsatz, die zum Austreiben von Spaltprodukten aus zumindest einem insbesondere defekten Brennstab ausgebildet ist. Die Vorrichtung ist ferner zur Entnahme von Flüssigkeits- und/oder Gasproben aus der Umgebung des zumindest einen Brennstabs ausgebildet. Die gegebenenfalls über eine vorhandene Defektstelle ausgetriebenen Spaltprodukte sind zum Teil auch in der entnommenen Flüssigkeits- und/oder Gasprobe enthalten. Gemäß der Erfindung umfasst ein insbesondere auf Sipping basierendes Analysesystem eine Analysevorrichtung, die zur Zufuhr der Flüssigkeits- und/oder Gasprobe mit der vorstehend beschriebenen Vorrichtung fluidisch verbunden ist.

Die konkrete gegenständliche Ausbildung der Vorrichtung zum Austreiben von Spaltprodukten und zur Entnahme derartige Spaltprodukte enthaltende Gas- und/oder Flüssigkeitsproben ist bei Incore-, Mast-, Box-, Vakuum- oder Einzelstab-Sippingsystemen unterschiedlich. Davon unbenommen kann die Analysevorrichtung bei allen genannten Sippingsystemen Anwendung finden, da der Analysevorrichtung sowohl eine entnommene Gas- als auch eine entnommene Flüssigkeitsprobe zugeführt werden kann. Mit Hilfe des ersten und des zweiten Detektors kann eine große Bandbreite unterschiedlicher, insbesondere gasförmiger oder gelöster Spaltprodukte nachgewiesen werden. Dadurch wird ermöglicht, die Analysevorrichtung nahezu unabhängig von der Abkling- oder Lagerzeit der zu untersuchenden Brennstäbe einzusetzen.

Das Austreiben von Spaltprodukten aus einem defekten Brennstab erfolgt beispielsweise durch Aufheizen des Brennstabs mittels Zufuhr von Wärme. Hierzu kann z. B. eine Selbstaufheizung des Brennelements bzw. des Brennstabs durch teilweisen Entzug des Kühlmittels oder durch Unterbrechung der Konvektion erfolgen. Alternativ oder zusätzlich kann ein Austritt von Spaltprodukten über eine etwaig vorhandene Defektstelle durch Druckverringerung, insbesondere durch Anheben des Brennstabs, unterstützt werden.

Die zur Analyse der insbesondere gelösten und/oder gasförmigen Spaltprodukte vorgesehene Analysevorrichtung weist vorzugsweise einen Einlass zur Trennvorrichtung auf, der stromab vom ersten Detektor angeordnet ist. Die insbesondere aus der unmittelbaren Umgebung eines leckenden Brennstabs entnommene Flüssigkeitsprobe wird somit erst nach Durchlaufen des ersten Detektors der Trennvorrichtung zugeführt. Die Flüssigkeitsprobe kann somit insbesondere hinsichtlich gelöster Spaltprodukte analysiert werden, bevor etwaig vorhandene gasförmige Spaltprodukte aus der flüssigen Phase mit Hilfe der Trennvorrichtung abgetrennt werden.

Bevorzugt ist der erste Detektor zur Messung von Gammastrahlung ausgebildet. Besonders bevorzugt ist der erste Detektor ein Gammaspektrometer. Derartige Geräte sind, gegebenenfalls in Verbindung mit einer entsprechenden Auswerteroutine, dazu ausgebildet, insbesondere Mehrfachlinien des erfassten Gammaspektrums zu entfalten und auszuwerten. In Verbindung mit einer zuvor gemessenen Untergrundaktivität sind dann Aussagen über die relative Konzentration der gammaemittierenden Spaltprodukte in der Flüssigkeitsprobe möglich.

Der zweite Detektor ist vorzugsweise zur Messung von Betastrahlung ausgebildet. Besonders bevorzugt ist der zweite Detektor ein Szintillationszähler. Der zweite Detektor kommt somit zur Bestimmung von gasförmigen betaemittierenden Spaltprodukten zum Einsatz, die direkt aus der Umgebung eines leckenden Brennstabs entnommen wurden und/oder aus der Flüssigkeitsprobe abgetrennt wurden.

Besonders bevorzugt ist der erste und/oder der zweite Detektor mit einem Strahlung absorbierenden Strahlungsschild zur Abschirmung vor Umgebungsstrahlung versehen, damit deren Einfluss auf die Messergebnisse minimiert wird.

Vorzugsweise zweigt von der ersten Leitung ein verschließbarer Auslass ab, der eine Entnahmestelle für eine Wasserprobe bildet. Diese Wasserprobe dient in Grenzfällen als weitere Möglichkeit der gezielteren Untersuchung im Labor, um andere relevante Spaltprodukte nachzuweisen, die Rückschlüsse auf einen defekten Brennstab erlauben.

In einem bevorzugten Ausführungsbeispiel ist stromab von ersten Detektor und insbesondere stromauf, d.h. vor dem zweiten Detektor, der insbesondere zur Messung von Betastrahlung ausgebildet ist, eine Trocknungsvorrichtung und/oder Trocknungsmittel zum Trocknen eines die zu analysierende Gasprobe enthaltenden Volumenstroms angeordnet. Feuchtigkeit, welche in der zugeführten Gasprobe enthalten ist, ist somit mittels der Trocknungsvorrichtung und/oder mittels der Trocknungsmittel, insbesondere Silikagel, abscheidbar. Der Feuchtigkeitsaustrag kann insbesondere kontinuierlich erfolgen. Dadurch kann vermieden werden, dass sich ein Wasserfilm oder Wassertropfen am zweiten Detektor bilden können, die die Messung aufgrund von Abschirmung verfälschen könnten.

Vorzugsweise sind innerhalb der Trennvorrichtung, die zum Abtrennen von Gas aus der die Flüssigkeitsprobe dient, Füllkörper, insbesondere Füllkörper mit großer äußerer Oberfläche, zum Feinverperlen des Strippinggases und damit zur Vergrößerung der Phasengrenzflächen angeordnet. Dadurch kann das Abtrennen von gasförmigen Spaltprodukten aus der Flüssigkeitsprobe unterstützt werden.

Als Trennvorrichtung kann vorzugsweise auch ein Membrankontaktor (Membranentgasung) eingesetzt werden, mit dem eine Stofftrennung mittels diffusivem Stofftransport durch eine poröse Membran genutzt wird. Ein Analysesystem zur Identifikation von defekten Brennstäben umfasst die vorstehend beschriebene Analysevorrichtung und eine zum Austreiben von Spaltprodukten aus zumindest einem defekten Brennstab und zur Entnahme von Spaltprodukte enthaltenden Flüssigkeits- und/oder Gasproben aus der Umgebung des zumindest einen Brennstabs ausgebildete Vorrichtung. Eine derartige Vorrichtung kann auch als Sipping-Vorrichtung bezeichnet werden. Gemäß der Erfindung ist die Vorrichtung zur Zuführung der Spaltprodukte enthaltenden Flüssigkeits- und/oder Gasprobe mit einer Analysevorrichtung nach einem der vorhergehenden Ansprüche fluidisch verbunden. Insbesondere ist vorgesehen, eine aus der unmittelbaren Umgebung eines leckenden Brennstabs entnommene Flüssigkeitsprobe in die erste Leitung der Analysevorrichtung sowie eine aus der unmittelbaren Umgebung eines leckenden Brennstabs entnommene Gasprobe in die zweite Leitung der Analysevorrichtung einzuspeisen.

Vorzugsweise bildet die zur Entnahme von Wasser- und Gasproben ausgebildete Vorrichtung des Analysesystems eine absenkbare, insbesondere eine in einem Brennelementlagerbecken, Transportbehälterbecken oder Reaktorbecken absenkbare Struktur. Die Vorrichtung weist einen inneren schachtförmigen Zwischenraum, in dem der zumindest eine zu untersuchende Brennstab oder das den zumindest einen Brennstab umfassende Brennelement einbringbar ist. Ein oberes Ende des schachtförmigen Zwischenraums ist von einem Haubenelement derart überdeckbar, dass oberhalb des Zwischenraums und unterhalb des Haubenelements ein Gaspolster durch Einblasen eines Gases ausbildbar ist. Der schachtförmige Zwischenraum ist insbesondere nicht fluiddicht ausgebildet, so dass das umgebende Wasser zumindest über Öffnungen in einem unteren Bereich eintreten kann. Die im Brennelementlagerbecken absenkbare Vorrichtung ist somit vom Typ einer Box-Sipping-Einrichtung. Das Einbringen des Gaspolsters dient u. a. dazu, die Wärmekonvektion zum Beckenwasser zu unterbrechen. Wasser, welches insbesondere durch Selbstaufheizung des Brennelements im schachtförmigen Zwischenraum erhitzt wird, kann nicht mehr in die Umgebung des Brennelementlagerbeckens über das obere Ende des schachtförmigen Zwischenraums entweichen, da dieses vom Gaspolster, welches sich innerhalb des Haubenelements ausbildet, verschlossen ist. Dies begünstigt eine Anreicherung von aus dem oder den Brennstäben ausgetriebenen Spaltprodukten im oberen Bereich des schachtförmigen Zwischenraums.

Vorzugsweise wird der schachtförmige Zwischenraum von mehreren, auf einer absenkbaren Arbeitsunterlage übereinander gestapelten und aneinander befestigbaren Strukturelementen gebildet ist. Eine derartige Konstruktion zeichnet sich dadurch aus, dass sich diese mit Hilfe von entsprechenden Greifwerkzeugen schnell und flexibel unter Wasser, insbesondere im Brennelementlagerbecken oder Transportbehälterbeladebecken, aufbauen lässt.

Vorzugsweise weist das oder die Strukturelemente, die einen unteren Abschnitt des schachtförmigen Zwischenraums bilden mehrere Öffnungen auf, um einen Wasseraustausch mit dem Beckenwasser des umgebenden Brennelementlagerbeckens zu ermöglichen.

Das Haubenelement und/oder die Strukturelemente sind vorzugsweise doppelwandig ausgebildet, wobei zwischen einer äußeren und einer inneren Wandung des Haubenelements und/oder des jeweiligen Strukturelements Isolationsmaterial zur thermischen Isolierung eingebracht ist oder Vakuum zur thermischen Isolierung angelegt wurde. Dadurch wird ein Wärmeübergang zum umgebenden Beckenwasser minimiert und das in den schachtförmigen Zwischenraum eingebrachte Brennelement bzw. die dort eingebrachten Brennstäbe können aufgeheizt werden, um Spaltprodukte über gegebenenfalls vorhandene Leckstellen auszutreiben.

Das Haubenelement ist vorzugsweise mittels einer Antriebseinheit bezüglich einer Hochachse der Vorrichtung fernbedienbar verstellbar, insbesondere parallel zur Hochachse höhenverstellbar und/oder um die Hochachse rotierbar ausgebildet. Auf diese Art kann das Haubenelement positioniert werden, um insbesondere einen Zugang zum schachtförmigen Zwischenraum zum Beladen oder zum Entladen mit einem Brennelement freizugeben.

Alternativ dazu kann das Haubenelement dazu ausgebildet sein von Hand mittels eines Stangenwerkzeuges verstellt zu werden.

In einem bevorzugten Ausführungsbeispiel ist eine Heizvorrichtung am unteren Ende des schachtförmigen Zwischenraums, welches dem Haubenelement gegenüberliegt, angeordnet. Diese separate Heizvorrichtung dient gegebenenfalls zur Unterstützung der Selbstaufheizung der zu untersuchenden Brennstäbe. Dadurch wird ermöglicht, auch Brennstäbe bzw. ein Brennelement nach längerer Abkling- bzw. Lagerzeit zu untersuchen,

Vorzugsweise ist ein Temperatursensor innerhalb des schachtförmigen Zwischenraums zur Messung der Temperatur des darin enthaltenen Beckenwassers und/oder des darin enthaltenen Gaspolsters angeordnet, damit insbesondere der Aufheizvorgang zum Austreiben der Spaltprodukte aus den defekten Brennstäben überwacht werden kann. Die Erfindung wird nachstehend auch hinsichtlich weiterer Merkmale und Vorteile anhand der Beschreibung von Ausführungsbeispielen und unter Bezugnahme auf die beiliegende Zeichnung näher erläutert. Dabei zeigen:
FIG 1 den schematischen Aufbau einer Analysevorrichtung zum Nachweis von Spaltprodukten durch Messung einer Radioaktivität,
FIG 2 eine Vorrichtung zum Austreiben von Spaltprodukten aus zumindest einem defekten Brennstab und zur Entnahme von Spaltprodukte enthaltenden Flüssigkeits- und/oder Gasproben aus der Umgebung des zumindest einen Brennstabs in geschlossenem Zustand und
FIG 3 die Vorrichtung der Figur 2 in geöffnetem Zustand.

Gleiche oder einander entsprechende Teile sind in allen Figuren mit den gleichen Bezugszeichen versehen.

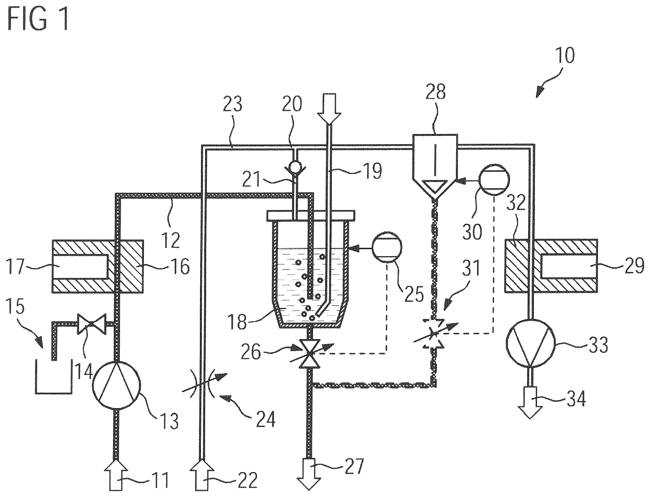

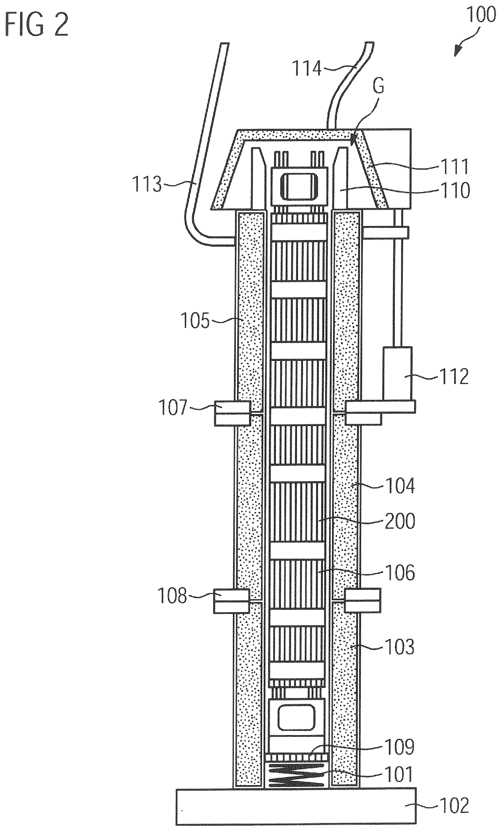

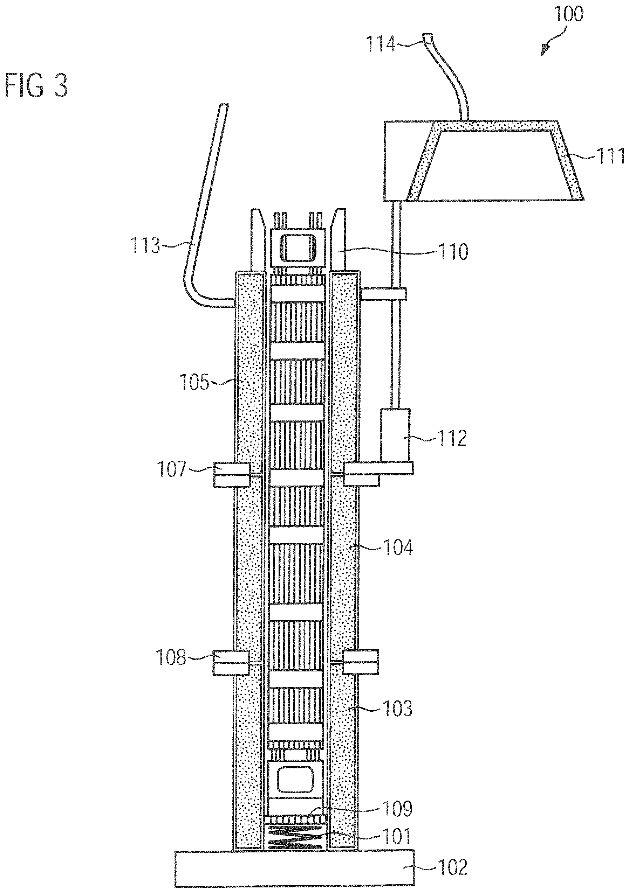

FIG 1 zeigt den schematischen Aufbau einer Analysevorrichtung 10 zum Nachweis von Spaltprodukten durch Messung einer Radioaktivität. Die Analysevorrichtung ist dazu vorgesehen in Verbindung mit einer Sipping-Einrichtung, insbesondere mit der in Figuren 2 und 3 dargestellten Vorrichtung 100 ein Analysesystem zu bilden, welches dazu ausgebildet ist defekte Brennstäbe bzw. defekte Brennstäbe enthaltende Brennelemente zu identifizieren.

Die Analysevorrichtung 10 umfasst eine Gasanalysestrecke und eine Flüssigkeitsanalysestrecke. Flüssigkeitsproben sind über einen ersten Einlass 11 einer ersten Leitung 12 zuführbar. Zum Ansaugen der Flüssigkeitsprobe ist an der ersten Leitung 12 einlassseitig eine Pumpe 13, beispielsweise eine Wasserstrahlpumpe, angeschlossen. Ein weiterer, über ein Ventil 14 absperrbarer Auslass 15 dient zur Entnahme einer Wasserprobe, insbesondere einer Wasserprobe aus einem Brennelementlager- oder Reaktorbecken, zur weiteren gezielten Untersuchung dieser Probe in einem Labor.

Die in der ersten Leitung 12 geführte Flüssigkeitsprobe durchläuft einen von einem Strahlungsschild 16 abgeschirmten Bereich, in dem ein zur Detektion von Gammastrahlung ausgebildeter erster Detektor 17 angeordnet ist. Konkret handelt es sich in dem gezeigten und nicht einschränkend aufzufassenden Ausführungsbeispiel um einen Gammaspektrometer. Am Ende der Flüssigkeitsanalysestrecke ist eine Trennvorrichtung 18 angeordnet, die dazu ausgebildet ist, etwaig in der Flüssigkeitsprobe vorhandene, insbesondere gelöste, gasförmige Bestandteile abzutrennen. In der dargestellten Trennvorrichtung 18 bildet ein Flüssigkeitsreservoir, in dem Strippinggas über eine Zuleitung 19 insbesondere im Gegenstromverfahren einblasbar ist. Der Flüssigkeitsprobe entnommenes Gas ist der Gasanalysestrecke über eine ein Rückschlagventil 20 aufweisende Verbindungsleitung 21 zuführbar. Innerhalb der Trennvorrichtung 18 sind optional Füllkörper, insbesondere Füllkörper mit äußerer großer Oberfläche angeordnet, um die Phasengrenzflächen zwischen der gasförmigen und der flüssigen Phase zu vergrößern.

Der Wasserstand innerhalb der Trennvorrichtung 18 ist über einen Niveauregler 25 mit Regelventil 26 einstellbar und insbesondere regelbar. Überschüssiges Wasser kann über den Auslass 27 insbesondere einem Beckenreinigungssystems des Brennelementlagerbeckens abgeführt werden. Die Ausführungsform der Trennvorrichtung als Membrankontaktor ist in den Figuren nicht explizit dargestellt.

Gasproben sind sowohl über einen zweiten Einlass 22 als auch über die Verbindungsleitung 21 einer zweiten Leitung 23 der Gasanalysestrecke zuführbar. Im Bereich des zweiten Einlasses 22 ist ein Drosselventil 24 angeordnet, so dass ein die Gasprobe enthaltender Volumenstrom gegebenenfalls angepasst und insbesondere geregelt werden kann.

Die Gasanalysestrecke weist ferner eine Trocknungsvorrichtung 28 auf, die stromab vor einem zweiten Detektor 29 angeordnet ist. Die Trocknungsvorrichtung 28 dient zum insbesondere physikalischen Abscheiden von etwaig im Gasvolumenstrom enthaltener Feuchtigkeit bzw. enthaltenem Wasser. Ein weiterer Niveauregler 30 mit weiterem Regelventil 31 stellt einen kontinuierlichen Wasseraustrag sicher. Abgeführtes Wasser ist über den Auslass 27 insbesondere dem Beckenreinigungssystem des Brennelementlagerbeckens zuführbar.

Die zweite Leitung 23 ist im Bereich des zweiten Detektors 29 ebenfalls durch einem Strahlungsschild 32 gegenüber Strahlung aus dem Umfeld abgeschirmt. Der zweite Detektor 29 ist in dem dargestellten Beispiel zur Messung von Betastrahlung als Szintillationszähler ausgeführt.

Am Ende der Gasanalysestrecke befindet sich eine Gaspumpe 33, beispielsweise eine Membranpumpe. Über einen weiteren Auslass 34 ist Gas einem nuklearen Entlüftungssystems insbesondere eines Kernkraftwerks zuführbar.

Die Analysevorrichtung wird zum Nachweis von Spaltprodukten insbesondere entsprechend dem nachfolgend beschriebenen Verfahren betrieben:
Eine Referenzprobe, bestehend aus Wasser aus dem Brennelementlagerbecken wird zur Bestimmung einer Untergrundaktivität entnommen. Anschließend wird eine Flüssigkeitsprobe aus der unmittelbaren Umgebung des zu untersuchenden Brennstabs bzw. des die zu untersuchenden Brennstäbe enthaltenden Brennelements, mit Hilfe der Pumpe 13 angesaugt.

Optional wird eine weitere Probe als Beistellprobe zur detaillierteren Untersuchung im Radiochemielabor entnommen.

Anschließend durchläuft die entnommene und potentiell nachweisbare Spaltprodukte enthaltende Flüssigkeitsprobe den durch das Strahlungsschild 16 des ersten Detektors 17 abgeschirmten Bereich, so dass Strahlungseinflüsse aus der Umgebung, insbesondere aus dem Beckenflurbereich des Kernkraftwerks weitgehend ausgeschlossen sind. Der zur Detektion von Gammastrahlung als Gammaspektrometer ausgebildete erste Detektor 17 verfügt vorzugsweise über eine Auswerteroutine zur Auswertung und Entfaltung von Mehrfachlinien des erfassten Gammaspektrums. Die Auswertung des Gammaspektrums hat zum Ziel, die relative Konzentration von in der Flüssigkeitsprobe enthaltenen Spaltprodukten, also von Gammastrahlung emittierenden Nuklidanteile zu bestimmen, um im Vergleich mit der zuvor bestimmten Untergrundaktivität eine Aussage zu treffen, ob ein Defekt vorliegt.

Die Flüssigkeitsprobe wird anschließend in die Trennvorrichtung 18 eingespeist, in welcher Strippinggas, vorzugsweise im Gegenstromverfahren und unter Verwendung von Füllkörpern zur Vermischung und Erhöhung der Phasengrenzflächen zwischen der gasförmigen und der flüssigen Phase, eingeblasen wird. Der dadurch angeregte Desorptionsvorgang bewirkt, dass ein Teil des eingeblasenen Strippinggases ins Wasser der eingespeisten Flüssigkeitsprobe übergeht. Gleichzeitig werden gebundene gasförmige, radioaktive Spaltprodukte aus dem Flüssigkeitsprobe gelöst (Stripping-Trennverfahren). Mit dem Niveauregler 25 wird in der Trennvorrichtung 18 eine Trennfläche aufrechterhalten, über der sich das Gas sammelt, welches der Flüssigkeitsprobe entnommen wurde. Überschüssiges Wasser wird über das Regelventil 26 abgelassen und über das Beckenreinigungssystem des Brennelementlagerbeckens entsorgt. Das aus der Flüssigkeitsprobe extrahierte Gas wird über ein Rückschlagventil 20 der zweiten Leitung 23 und somit der Gasanalysestrecke zugeführt.

Die Gasprobeentnahme wird durch Aktivierung der Gaspumpe 33, welche am Ende der Gasanalysestrecke angebracht ist, aktiviert. Zunächst wird eine Gasprobe bzw. ein Gasprobenstrom über den zweiten Einlass 22 und dem Drosselventil 24 in die zweite Leitung 24 eingespeist. Hierbei wird ein definierter Volumenstrom eingestellt. Bevor der die Gasprobe enthaltende Gasstrom über den zweiten Detektor 29 geleitet wird, wird dieser in der Trocknungsvorrichtung 28 getrocknet, da die Messergebnisse von einem Wasserfilm oder von Wassertropfen auf der Detektormembrane verfälscht werden können. Als Trocknungsvorrichtung 28 kann ein Aktivtrockner vorgesehen sein. In diesem Fall erfolgt eine Herabsetzung des Taupunktes durch Kühlung und Ausscheiden des Wassers. Ein kontinuierlicher Wasseraustrag wird mit dem Niveauregler 30 sichergestellt, der das Regelventil 31 entsprechend regelt. Alternativ oder zusätzlich kann der Wasseraustrag mit Hilfe von Trocknungsmitteln (z.B. Silikagel) erfolgen. Der zweite Detektor 29 ist dazu ausgebildet, Betastrahlung nachzuweisen und ist im dargestellten Beispiel als Szintillationszähler ausgeführt. Mit Hilfe des zweiten Detektors 29 und einer entsprechenden Auswerteroutine wird die relative Konzentration der betaemittierenden Nuklidanteile gegenüber dem Untergrund bestimmt.

Während des Sippingvorgangs, also während der Entnahme der Flüssigkeits- und/oder Gasprobe aus der Umgebung des zu untersuchenden Brennstabs bzw. Brennelements, muss eine inhärente Sicherheit sichergestellt werden. Hierzu ist insbesondere Überkritikalität auszuschließen und eine hinreichende Kühlung sicherzustellen. Darüber hinaus bestehen für derartige, auf Sipping beruhende Analysesysteme strenge Strahlenschutzvorgaben ("As Low As Reasonably Achievable", ALARA).

Die Entnahme der Gas- und/oder Flüssigkeitsprobe erfolgt bevorzugt mit der in Figuren 2 und 3 schematisch dargestellten Vorrichtung 100. Die Vorrichtung 100 ist zum Austreiben von Spaltprodukten aus defekten Brennstäben und zur Entnahme von Flüssigkeits- und/oder Gasproben aus der Umgebung zumindest eines defekten Brennstabs ausgebildet. Die Vorrichtung 100 kann als Teil eines Box-Sipping-Systems vorgesehen sein.

Die Vorrichtung 100 ist mobil und weist eine separate Heizvorrichtung 101 auf. Die Vorrichtung 100 wird unter Wasser auf einer Arbeitsunterlage 102 im Brennelementlagerbecken aufgestellt und umfasst mehrere übereinander stapelbare und aneinander befestigbare Strukturelemente 103, 104, 105 , welche im montierten Zustand einen schachtförmigen Zwischenraum 106 begrenzen, in dem ein Brennstäbe enthaltendes Brennelement 200 angeordnet werden kann. Das dargestellte Beispiel zeigt einen dreiteiligen Aufbau.

Die Strukturelemente 103, 104, 105 definieren thermisch isolierte Wandungsabschnitte des schachtförmigen Zwischenraums 106 und sind über Trennstellen 107, 108 miteinander verbindbar. Die Strukturelemente 103, 104, 105 sind doppelwandig ausgebildet. Zwischen einer äußeren und einer inneren Wandung des jeweiligen Strukturelements 103, 104, 105 ist Isolationsmaterial zur thermischen Isolierung eingebracht.

Die Montage der Vorrichtung 100 im Brennelementlagerbecken umfasst insbesondere folgende Schritte: Zunächst wird ein unteres Strukturelement 103 auf der Arbeitsunterlage 102 montiert. Über die erste Trennstelle 108 wird auf dem unteren Strukturelement 103 ein weiteres, mittleres Strukturelement 104 montiert. Oberhalb der zweiten Trennsteile 107 wird ein drittes, oberes Strukturelement 105 angeordnet.

Die Längenausdehnung der Strukturelemente bezüglich einer Hochachse, also bezüglich der senkrecht zur Arbeitsauflage 102 verlaufenden Richtung, ist auf die entsprechende Länge des aufzunehmenden Brennelementes 200 angepasst.

Die Strukturelemente 103, 104, 105 sind hinsichtlich ihres Querschnitts so bemessen, dass die Brennelemente 200 mit dem größten Querschnitt aufgenommen werden können. Durch den Einsatz von Füllkörper, die in den schachtförmigen Zwischenraum 106 eingebracht werden, kann gegebenenfalls sowohl der Querschnitt als auch die Länge des zur Aufnahme für das Brennelement 200 zu Verfügung stehende Zwischenraum 106 angepasst werden. Auf diese Art und Weise sind verschiedene Typen von Brennelementen 200, die sich insbesondere hinsichtlich ihrer räumlichen Ausdehnung unterscheiden, handhabbar.

Die im unteren Bereich des schachtförmigen Zwischenraums 106 eingebaute, flache Heizvorrichtung 101 ist dazu ausgelegt, das im schachtförmigen Zwischenraum 106 befindliche Beckenwasser schnell aufzuheizen. Zwischen Heizvorrichtung 101 und Brennelement 200 ist ein rostähnliches Gitterelement 109 angeordnet, welches dem Aufheizen nur wenig Widerstand entgegensetzt.

Der von den Strukturelementen 103, 104, 105 gebildete schachtförmige Zwischenraum 106 ist nicht fluiddicht ausgebildet, vielmehr sind in den Wandungen des Strukturelements 103 auf Höhe der Heizvorrichtung 101 seitlich Öffnungen vorgesehen, die ein freie Einströmen von Wasser erlauben.

Auf das obere Ende des schachtförmigen Zwischenraums 106 ist eine Führung 110 montiert, welche das Einsetzen des Brennelementes 200 mit Hilfe der Brennelementlademaschine oder mit Hilfe eines Greifwerkzeugs erleichtert.

Oberhalb des schachtförmigen Zwischenraums 106 ist ein Haubenelement 111 positionierbar, welches kurz über dem oberen Ende der im Brennelement 200 angeordneten Brennstäbe endet. Durch Fluten des Haubenelements 111 mit einem Gas, insbesondere mit Luft, wird ein wasserfreier Bereich im oberen Bereich des Brennelements 200 geschaffen. Dabei werden jedoch nicht die Brennstäbe selbst freilegt. Die freie Konvektion zwischen Wassereintritt am unteren Ende des schachtförmigen Zwischenraums 106 und dem oberen Abschnitt des Brennelementes 200 zum Brennelementlagerbecken hin wird unterbunden und führt damit zum Aufheizen des Brennelementes 200 durch Selbsterwärmung.

Das Aufheizen wird gegebenenfalls, insbesondere bei Brennelementen mit langer Abkling- bzw. Lagerzeit, mit Hilfe der Heizvorrichtung 101 unterstützt. Eine Überhitzung, die sich beispielsweise dadurch abzeichnet, dass Wasser im unteren Bereich der Brennstäbe verdampft, kann vermieden werden, da Beckenwasser weiterhin im unteren Bereich des schachtförmigen Zwischenraums 106 einströmen kann und somit die Brennstäbe ständig von Wasser umgeben bleiben.

Das Haubenelement 111 ist ebenfalls doppelwandig ausgebildet. Zwischen einer inneren und einer äußeren Wandung des Haubenelements 111 befindet sich thermisch isolierendes Isolationsmaterial oder ist Vakuum angelegt, für den gleichen Zweck.

Das Haubenelement 111 ist ferner mit einer Antriebseinheit 112 versehen, der als Hub-Drehantrieb ausgebildet ist. Das Haubenelement 111 ist somit derart fernbedienbar oder von Hand verstellbar, dass dieses durch Rotation um die Hochachse und Translation parallel zur Hochachse über die Strukturelemente 103, 104, 105 derart platzierbar ist, dass der schachtförmigen Zwischenraum 106 überdeckt wird. Figur 3 zeigt die Vorrichtung 100 in geöffneter Stellung, wohingegen das Haubenelement 111 in Figur 2 den schachtförmigen Zwischenraum 106 überdeckt.

Durch Heben und Drehen des Haubenelements 111 kann somit von oben ein freier Zugang zum Brennelement 200 bereitgestellt werden. Im Notfall kann dieser Vorgang auch von Hand mit Stangenwerkzeugen durchgeführt werden.

In einem oberen Bereich des schachtförmigen Zwischenraums 106 ist ein Leitungsabschnitt 113 angeordnet, der zur Verbindung mit der ersten Leitung 12, der Analysevorrichtung 10, insbesondere über den ersten Einlass 11, vorgesehen ist. Ein weiterer Leitungsabschnitt 114, der zur Verbindung mit der zweiten Leitung 22 der Analysevorrichtung 10, insbesondere über den zweiten Einlass 22,vorgesehen ist, weist einen Einlass für Gas auf, der im Bereich des Haubenelements 111 angeordnet ist. Dieser weitere Leitungsabschnitt 114 dient ferner bevorzugt dazu, Gas einzublasen, um das Gaspolster G unterhalb des Haubenelements auszubilden (siehe Figur 3).

Zur ökonomischen Durchführung der Sippingvorgänge ist es sinnvoll, mit zwei derartig ausgebildeten Vorrichtungen 100 zu arbeiten. Dabei dient eine erste Vorrichtung 100 zum Prüfen eines Brennelementes 200, während eine zweite Vorrichtung 100 mit einem anderen Brennelement be- oder entladen wird.

Der Sippingvorgang ist wie folgt: Zunächst befindet sich die Vorrichtung 100 in geöffneter Stellung (Figur 3). In diesem Zustand wird die Wasserprobe zur Messung der Untergrundaktivität genommen. Nach dem Einsetzen des Brennelementes 200 wird das Haubenelement 111 geschlossen (Figur 2) und das Gaspolster G über den weiteren Leitungsabschnitt 114 eingebracht. Nach Erreichen einer minimalen Aufheizspanne, die mit Hilfe einer Temperaturmessung überprüft wird, kann der eigentliche Sippingtest, d.h. die Entnahme der Flüssigkeitsprobe und der Gasprobe durchgeführt werden. Die Auswertung erfolgt mit Hilfe der Analysevorrichtung 10, die mit der Vorrichtung 100 fluidisch verbunden ist. Hierbei wird der Leitungsabschnitt 113 der Vorrichtung 100 mit der ersten Leitung 12 der Analysevorrichtung 10 sowie der weitere Leitungsabschnitt 114 der Vorrichtung 100 mit der zweiten Leitung 114 der Analysevorrichtung 10 verbunden. Die Flüssigkeitsprobe und die Gasprobe werden in die Analysevorrichtung 10 eingespeist. Die Gesamtheit aus Analysevorrichtung 10 und Vorrichtung 100 bildet das Analysesystem.

Nach Ablassen des Gases unterhalb des Haubenelements 111 kann dieses wieder geöffnet werden und das Brennelement 200 entnommen werden.

Die Vorteile der als Box-Sipping-Einrichtung ausgebildeten Vorrichtung 100 im Zusammenhang mit der vorstehend beschriebenen Analysevorrichtung 10 sind insbesondere folgende:
- Es ist kein vakuumdichtes Gehäuse erforderlich, welches die inhärente Sicherheit beeinträchtigen könnte. Das exemplarisch erläuterte Analysesystem zeichnet sich unter anderem durch eine passive Ausfallsicherung bezüglich ausreichender Kühlung der Brennstäbe bzw. des Brennelementes während des Sippingvorgangs aus.
- Die Vorrichtung 100 umfasst doppelwandige Strukturelemente 103, 104, 105, deren äußere und innere Oberflächen insbesondere von glatten Stahlblechen gebildet sind. Mit dieser Anordnung ist eine leichte Dekontamination sowohl der den schachtförmigen Zwischenraum 106 begrenzenden Innenseite, als auch der Außenseite der Vorrichtung 100 möglich. Dies begünstigt, durch die Reduktion einer möglichen Kontamination, die Strahlungsexposition. Durch das eingeblasene Gaspolster G wird eine effektive thermische Isolierung realisiert, die ständig aufrechterhalten werden kann und bei auftretenden Undichtigkeiten kontrollierbar bleibt. Das Gaspolster G bietet eine thermische Isolierung zum umgebenden Wasser im Brennelementlagerbecken und gleichzeitig durch die Niveauhaltung der Wasserüberdeckung der Brennstäbe wird eine Überhitzung ausgeschlossen. Bezüglich der damit sich ergebenden räumlichen Distanz und des Fehlens des Moderators zu einem in unmittelbarer Umgebung gehandhabten Brennelementes 200 ist die Unterkritikalität gegeben.
- Die Anordnung der Heizvorrichtung 101 im unteren Bereich des schachtförmigen Zwischenraums 106 in Verbindung mit der natürlichen Selbstaufheizung des Brennelementes 200 bewirkt beim Sippingvorgang eine thermische Strömung nach oben und damit eine Aufkonzentration der zu analysierenden, insbesondere gelösten Spaltprodukte im oberen Bereich des schachtförmigen Zwischenraums 106. Gasförmige Spaltprodukte sammeln sich entsprechend im Gaspolster G unterhalb des Haubenelements 111 an. In diesem Bereich erfolgt die Entnahme der zu analysierenden Gas- und Flüssigkeitsproben.
- Die separate Heizvorrichtung 101 ermöglicht, dass Spaltprodukte in hinreichender Konzentration auch aus Brennelementen 200 bzw. aus Brennstäben nach längerer Abkling- oder Lagerzeit ausgetrieben werden können.
- Die Analysevorrichtung 10 ermöglicht eine Analyse sowohl von Flüssigkeits- als auch von Gasproben. Zusätzlich kann gegebenenfalls in der Flüssigkeitsprobe enthaltenes Gas untersucht werden. Ferner besteht die Möglichkeit der zusätzlichen Auswertung der Flüssigkeits- und/oder Gasprobe in einem Radiochemielabor. Die Analyseergebnisse zeichnen sich daher durch hohe Zuverlässigkeit aus. Durch die einfache Handhabung und verwendete Technik ist eine schnelle Durchführung des Sipping-Prozesses möglich. Der Reparaturaufwand ist aufgrund weniger aktiver Komponenten gering, was auch die Reduktion einer möglichen Strahlungsexposition begünstigt.

### Bezugszeichenliste

- 10: Analysevorrichtung
- 11: erster Einlass
- 12: erste Leitung
- 13: Pumpe
- 14: Ventil
- 15: Auslass
- 16: Strahlungsschild
- 17: erster Detektor
- 18: Trennvorrichtung
- 19: Zuleitung
- 20: Rückschlagventil
- 21: Verbindungsleitung
- 22: zweiter Einlass
- 23: zweite Leitung
- 24: Drosselventil
- 25: Niveauregler
- 26: Regelventil
- 27: Auslass
- 28: Trocknungsvorrichtung
- 29: zweiter Detektor
- 30: Niveauregler
- 31: Regelventil
- 32: Strahlungsschild
- 33: Gaspumpe
- 34: Auslass

- 100: Vorrichtung
- 101: Heizvorrichtung
- 102: Arbeitsunterlage
- 103: Strukturelement
- 104: Strukturelement
- 105: Strukturelement
- 106: Zwischenraum
- 107: Trennstellen
- 108: Trennstelle
- 109: Gitterelement
- 110: Führung
- 111: Haubenelement
- 112: Antriebeinheit
- 113: Leitungsabschnitt
- 114: Leitungsabschnitt

- 200: Brennelement
- G: Gaspolster

## Patentansprüche

1. Analysevorrichtung (10) zum Nachweis von Spaltprodukten durch Messung einer Radioaktivität, umfassend
- eine erste Leitung (12) zum Führen einer Flüssigkeitsprobe,
- einen an die erste Leitung (12) angeschlossenen und zur Messung der Radioaktivität von in der Flüssigkeitsprobe enthaltenen Spaltprodukten ausgebildeten ersten Detektor (17),
- eine zweite Leitung (23) zum Führen einer Gasprobe und
- einen an die zweite Leitung (23) angeschlossenen und zur Messung der Radioaktivität von in der Gasprobe enthaltenen Spaltprodukten ausgebildeten zweiten Detektor (29),
wobei die erste Leitung (12) und die zweite Leitung (23) einlassseitig zum Anschluss an eine zum Austreiben von Spaltprodukten aus zumindest einem defekten Brennstab und zur Entnahme von Spaltprodukte enthaltenden Flüssigkeits- und/oder Gasproben aus der Umgebung des zumindest einen Brennstabs ausgebildete Vorrichtung (100), nämlich eine sogenannte Sipping-Vorrichtung, ausgebildet sind,
**gekennzeichnet durch**
eine von der Sipping-Vorrichtung separate Trennvorrichtung (18) zum Abtrennen von Gas aus der die Flüssigkeitsprobe führenden ersten Leitung (12), welche einen in die zweite Leitung (23) mündenden Auslass für entnommenes Gas derart aufweist, dass das entnommene Gas als Gasprobe dem zweiten Detektor (29) zur Messung der Radioaktivität von darin enthaltenen Spaltprodukten zuführbar ist.

2. Analysevorrichtung (10) nach Anspruch 1,
**dadurch gekennzeichnet, dass** von der ersten Leitung (12) ein verschließbarer Auslass (15) abzweigt, der eine Entnahmestelle für eine Wasserprobe bildet.

3. Analysevorrichtung (10) nach Anspruch 1 oder 2,
**dadurch gekennzeichnet, dass**
die Trennvorrichtung (18) stromab vom ersten Detektor (17) angeordnet ist.

4. Analysevorrichtung (10) nach einem der vorhergehenden Ansprüche, **dadurch gekennzeichnet, dass**
der erste Detektor (17) zur Messung von Gammastrahlung, insbesondere als Gammaspektrometer, ausgebildet ist.

5. Analysevorrichtung (10) nach einem der vorhergehenden Ansprüche, **dadurch gekennzeichnet, dass**
der zweite Detektor (29) zur Messung von Betastrahlung, insbesondere als Szintillationszähler, ausgebildet ist.

6. Analysevorrichtung (10) nach einem der vorhergehenden Ansprüche, **dadurch gekennzeichnet, dass**
der erste und/oder der zweite Detektor (17, 29) mit einem Strahlung absorbierenden Strahlungsschild (16, 32) zur Abschirmung von Umgebungsstrahlung versehen ist.

7. Analysevorrichtung (10) nach einem der vorhergehenden Ansprüche, **dadurch gekennzeichnet, dass** die Analysevorrichtung (10) eine Trocknungsvorrichtung (28) oder einen Membrankontaktor und/oder Trocknungsmittel, insbesondere Silikagel, umfasst, mittels derer Feuchtigkeit, welche in der in der zweiten Leitung (23) geführten Gasprobe enthalten ist, abscheidbar ist.

8. Analysevorrichtung (10) nach einem der vorhergehenden Ansprüche, **dadurch gekennzeichnet, dass**
innerhalb der Trennvorrichtung (18) Füllkörper, insbesondere Füllkörper mit großer äußerer Oberfläche, zur Vergrößerung einer Phasengrenzfläche angeordnet sind.

9. Analysesystem, umfassend eine zum Austreiben von Spaltprodukten aus zumindest einem defekten Brennstab und zur Entnahme von Spaltprodukte enthaltenden Flüssigkeits- und/oder Gasproben aus der Umgebung des zumindest einen Brennstabs ausgebildete Vorrichtung (100)
**dadurch gekennzeichnet, dass**
das Analysesystem zudem eine Analysevorrichtung (10) nach einem der vorhergehenden Ansprüche umfasst,
wobei die Vorrichtung (100) zur Zuführung der Spaltprodukte enthaltenden Flüssigkeits- und/oder Gasprobe mit der Analysevorrichtung (10) fluidisch verbunden ist.

10. Analysesystem nach Anspruch 9,
**dadurch gekennzeichnet, dass**
die Vorrichtung (100) eine insbesondere in einem Brennelementlagerbecken, Transportbehälterbecken oder Reaktorbecken absenkbare Struktur bildet, mit einem inneren schachtförmigen Zwischenraum (106), in dem der zumindest eine Brennstab oder ein den zumindest einen Brennstab umfassendes Brennelement (200) einbringbar ist, wobei das obere Ende des Zwischenraums (106) von einem Haubenelement (111) derart überdeckbar ist, dass oberhalb des Zwischenraums (106) und unterhalb des Haubenelements (111) ein Gaspolster (G) durch Einblasen eines Gases ausbildbar ist.

11. Analysesystem nach Anspruch 9 oder 10,
**dadurch gekennzeichnet, dass**
der schachtförmige Zwischenraum (106) von mehreren, auf einer absenkbaren Arbeitsunterlage (102) übereinander gestapelten und aneinander befestigbaren Strukturelementen (103, 104, 105) gebildet ist.

12. Analysesystem nach einem der Ansprüche 9 bis 11,
**dadurch gekennzeichnet, dass**
das Haubenelement (111) und/oder die Strukturelemente (103, 104, 105) doppelwandig ausgebildet sind, wobei zwischen einer äußeren und einer inneren Wandung des Haubenelements (111) und/oder des jeweiligen Strukturelements (103, 104, 105) Isolationsmaterial zur thermischen Isolierung eingebracht ist.

13. Analysesystem nach einem der Ansprüche 8 bis 12,
**dadurch gekennzeichnet, dass**
das Haubenelement (111) mittels einer Antriebseinheit (112) bezüglich einer Hochachse der Vorrichtung (100) fernbedienbar verstellbar, insbesondere parallel zur Hochachse höhenverstellbar und/oder um die Hochachse rotierbar ist.

14. Analysesystem nach Anspruch einem der Ansprüche 8 bis 13,
**dadurch gekennzeichnet, dass**
eine Heizvorrichtung (101) am unteren, dem Haubenelement (111) gegenüberliegenden Ende des schachtförmigen Zwischenraums (106) angeordnet ist.

15. Analysesystem nach Anspruch einem der Ansprüche 8 bis 14,
**dadurch gekennzeichnet, dass**
ein Temperatursensor innerhalb des schachtförmigen Zwischenraums (106) zur Messung der Temperatur von darin enthaltenem Beckenwasser und/oder des darin enthaltenen Gaspolsters (G) angeordnet ist.

## Claims

1. An analysis device (10) for the detection of fission products by measurement of a radioactivity, comprising
- a first line (12) for carrying a liquid sample,
- a first detector (17) connected to the first line (12) and designed for measuring the radioactivity of fission products contained in the liquid sample,
- a second line (23) for carrying a gas sample and
- a second detector (29) connected to the second line (23) and designed for measuring the radioactivity of fission products contained in the gas sample,
wherein the first line (12) and the second line (23) are constructed, on their inlet side, for connection to a device designed for expelling fission products from at least one defective fuel rod and for removing liquid- and/or gas samples containing fission products from the environment of the at least one fuel rod, namely a so-called sipping device,
**characterized by**
a separation device (18), separate from the sipping device, for separating gas from the first line (12) carrying the liquid sample, which line has an outlet opening for removed gas opening into the second line (23) in such a manner that the removed gas can be supplied as a gas sample to the second detector (29) for measuring the radioactivity of fission products contained therein.

2. The analysis device (10) according to Claim 1,
**characterized in that** a closable outlet (15), which forms a sampling point for a water sample, branches off from the first line (12).

3. The analysis device (10) according to Claim 1 or 2,
**characterized in that**
the separation device (18) is arranged downstream of the first detector (17).

4. The analysis device (10) according to any one of the preceding claims, **characterized in that**
the first detector (17) is designed for measuring gamma radiation, in particular designed as a gamma spectrometer.

5. The analysis device (10) according to any one of the preceding claims, **characterized in that**
the second detector (29) is designed for measuring beta radiation, in particular designed as a scintillation counter.

6. The analysis device (10) according to any one of the preceding claims, **characterized in that**
the first and/or the second detector (17, 29) is provided with a radiation absorbing radiation shield (16, 32) for shielding ambient radiation.

7. The analysis device (10) according to any one of the preceding claims, **characterized in that**
the analysis device (10) comprises a drying device (28) or a membrane contactor and/or drying means, in particular silica gel, by means of which moisture, which is contained in the gas sample carried in the second line (23), can be separated.

8. The analysis device (10) according to any one of the preceding claims, **characterized in that**
filling materials, in particular filling materials with a large outer surface are arranged within the separation device (18) for increasing a phase boundary interface.

9. An analysis system, comprising a device (100) designed for expelling fission products from at least one defective fuel rod and for removing liquid- and/or gas samples containing fission products from the environment of the at least one fuel rod **characterized in that**
the analysis system further comprises an analysis device (10) according to any one of the previous claims,
wherein the device (100) for supplying the liquid- and/or gas sample containing fission products is fluidically connected to the analysis device (10).

10. The analysis system according to Claim 9, **characterized in that**
the device (100) forms a lowerable structure, in particular a structure which is lowerable in a fuel assembly storage basin, transport container basin or reactor basin, with an inner duct-shaped intermediate space (106), in which the at least one fuel rod or a fuel assembly (200) comprising at least one fuel rod can be introduced, wherein the upper end of the intermediate space (106) can be covered by a hood element (111) in such a manner that above the intermediate space (106) and below the hood element (111) a gas cushion can be formed by blowing in a gas.

11. The analysis system according to Claim 9 or 10, **characterized in that**
the duct-shaped intermediate space (106) is formed by a plurality of structural elements (103, 104, 105) stacked one above another on a lowerable work support (102) and which can be fastened to one another.

12. The analysis system according to Claims 9 to 11, **characterized in that**
the hood element (111) and/or the structural elements (103, 104, 105) are designed with a double wall, wherein between an outer and an inner wall of the hood element (111) and/or of the respective structural element (103, 104, 105) insulating material is introduced for thermal insulation.

13. The analysis system according to any one of Claims 8 to 12, **characterized in that**
the hood element (111) is remotely controllably adjustable by means of a drive unit (112) with respect to a vertical axis of the device (100), in particular is height-adjustable parallel to the vertical axis and/or can be rotated about the vertical axis.

14. The analysis system according to any one of Claims 8 to 13, **characterized in that**
a heating device (101) is arranged at the lower end of the duct-shaped intermediate space (106) opposite the hood element (111).

15. The analysis system according to any one of Claims 8 to 14, **characterized in that**
a temperature sensor is arranged within the duct-shaped intermediate space (106) for measuring the temperature of basin water contained therein and/or of the gas cushion (G) contained therein.

## Revendications

1. Dispositif d'analyse (10) pour la détection de produits de fission par mesure d'une radioactivité, comprenant
- une première conduite (12) pour acheminer un échantillon liquide,
- un premier détecteur (17) raccordé à la première conduite (12) et réalisé pour mesurer la radioactivité de produits de fission contenus dans l'échantillon liquide,
- une deuxième conduite (23) pour acheminer un échantillon gazeux et
- un deuxième détecteur (29) raccordé à la deuxième conduite (23) et réalisé pour mesurer la radioactivité de produits de fission contenus dans l'échantillon gazeux,
dans lequel la première conduite (12) et la deuxième conduite (23) sont réalisées côté entrée pour le raccordement à un dispositif (100), à savoir un dispositif dit de ressuage, réalisé pour évacuer des produits de fission d'au moins un crayon combustible défectueux et pour prélever des échantillons liquides et/ou gazeux contenant des produits de fission de l'environnement du au moins un crayon combustible,
**caractérisé par**
un dispositif de séparation (18) séparé du dispositif de ressuage pour séparer le gaz de la première conduite (12) acheminant l'échantillon liquide, lequel présente une sortie débouchant dans la deuxième conduite (23) pour le gaz prélevé, de telle sorte que le gaz prélevé peut être amené en tant qu'échantillon gazeux au deuxième détecteur (29) pour mesurer la radioactivité de produits de fission contenus dans celui-ci.

2. Dispositif d'analyse (10) selon la revendication 1,
**caractérisé en ce qu'**une sortie (15) pouvant être fermée, qui forme un point de prélèvement pour un échantillon d'eau, bifurque de la première conduite (12).

3. Dispositif d'analyse (10) selon la revendication 1 ou 2,
**caractérisé en ce que**
le dispositif de séparation (18) est disposé en aval du premier détecteur (17).

4. Dispositif d'analyse (10) selon l'une quelconque des revendications précédentes, **caractérisé en ce que**
le premier détecteur (17) est réalisé pour mesurer un rayonnement gamma, en particulier sous la forme d'un spectromètre gamma.

5. Dispositif d'analyse (10) selon l'une quelconque des revendications précédentes, **caractérisé en ce que**
le deuxième détecteur (29) est réalisé pour mesurer un rayonnement bêta, en particulier sous la forme d'un compteur à scintillation.

6. Dispositif d'analyse (10) selon l'une quelconque des revendications précédentes, **caractérisé en ce que**
le premier et/ou le deuxième détecteur (17, 29) est pourvu d'un écran au rayonnement (16, 32) absorbant un rayonnement pour protéger d'un rayonnement ambiant.

7. Dispositif d'analyse (10) selon l'une quelconque des revendications précédentes, **caractérisé en ce que**
le dispositif d'analyse (10) comprend un dispositif de dessication (28) ou un contacteur à membrane et/ou déshydratant, en particulier comprenant du gel de silice, au moyen duquel l'humidité, laquelle est contenue dans l'échantillon gazeux acheminé dans la deuxième conduite (23), peut être éliminée.

8. Dispositif d'analyse (10) selon l'une quelconque des revendications précédentes, **caractérisé en ce que**
des corps de remplissage, en particulier des corps de remplissage avec une grande surface extérieure, sont disposés à l'intérieur du dispositif de séparation (18) pour augmenter une surface limite des phases.

9. Système d'analyse, comprenant un dispositif (100) réalisé pour évacuer des produits de fission d'au moins un crayon combustible défectueux et pour prélever des échantillons liquides et/ou gazeux contenant des produits de fission de l'environnement du au moins un crayon combustible
**caractérisé en ce que**
le système d'analyse comprend en outre un dispositif d'analyse (10) selon l'une quelconque des revendications précédentes,
dans lequel le dispositif (100) pour amener l'échantillon liquide et/ou gazeux contenant les produits de fission est relié fluidiquement au dispositif d'analyse (10).

10. Système d'analyse selon la revendication 9,
**caractérisé en ce que**
le dispositif (100) forme une structure pouvant être abaissée en particulier dans une piscine de stockage d'assemblage combustible, piscine de contenant de transport ou piscine de réacteur, avec un espace intermédiaire (106) intérieur en forme de puits, dans lequel le au moins un crayon combustible ou un assemblage combustible (200) comprenant le au moins un crayon combustible peut être introduit, dans lequel l'extrémité supérieure de l'espace intermédiaire (106) peut être recouverte par un élément capot (111), de telle sorte qu'un coussin de gaz (G) peut être réalisé au-dessus de l'espace intermédiaire (106) et au-dessous de l'élément capot (111) par insufflation d'un gaz.

11. Système d'analyse selon la revendication 9 ou 10,
**caractérisé en ce que**
l'espace intermédiaire (106) en forme de puits est formé par plusieurs éléments structuraux (103, 104, 105) empilés sur un support de travail (102) pouvant être abaissé et pouvant être fixés les uns aux autres.

12. Système d'analyse selon l'une quelconque des revendications 9 à 11, **caractérisé en ce que**
l'élément capot (111) et/ou les éléments structuraux (103, 104, 105) sont réalisés à double paroi, dans lequel un matériau d'isolation pour l'isolation thermique est introduit entre une paroi extérieure et une paroi intérieure de l'élément capot (111) et/ou de l'élément structural (103, 104, 105) respectif.

13. Système d'analyse selon l'une quelconque des revendications 8 à 12, **caractérisé en ce que**
l'élément capot (111) peut être déplacé de manière télécommandable au moyen d'une unité d'entraînement (112) par rapport à un axe vertical du dispositif (100), en particulier peut être déplacé en hauteur parallèlement à l'axe vertical et/ou peut être amené en rotation autour de l'axe vertical.

14. Système d'analyse selon la revendication l'une quelconque des revendications 8 à 13,
**caractérisé en ce que**
un dispositif de chauffage (101) est disposé sur l'extrémité inférieure, opposée à l'élément capot (111), de l'espace intermédiaire (106) en forme de puits.

15. Système d'analyse selon la revendication l'une quelconque des revendications 8 à 14,
**caractérisé en ce que**
un capteur de température est disposé à l'intérieur de l'espace intermédiaire (106) en forme de puits pour mesurer la température de l'eau de piscine contenue dans celui-ci et/ou du coussin gazeux (G) contenu dans celui-ci.
